# EUROPEAN PATENT APPLICATION

(11) **EP 3 783 720 A1**
(43) Date of publication of application: **24.02.2021**
(21) Application number: 19192602.1
(22) Date of filing: 20.08.2019
(51) Int. Cl.: H01M 10/054, H01M 10/0568, H01M 10/0569, H01M 4/58, H01M 4/136

(54) **AN ELECTROLYTE SOLUTION COMPRISING AN ALKALI METAL BIS (OXALATO)BORATE SALT**

(71) Applicant: Altris AB, 802 72 Gävle (SE)
(72) Inventor: MOGENSEN, Ronnie, 752 32 Uppsala (SE); BRANT, William, 752 57 Uppsala (SE); YOUNESI, Reza, 754 31 Uppsala (SE); COLBIN, Simon, 752 34 Uppsala (SE)
(74) Representative: Kransell & Wennborg KB

(57) **Abstract**

The present disclosure generally relates to an electrolyte solution comprising an alkali-metal bis(oxalato)borate salt. The present disclosure also relates to a method for preparing such an electrolyte solution and to a battery cell comprising the electrolyte.

## Description

### TECHNICAL FIELD

The present disclosure generally relates to an electrolyte solution comprising an alkali-metal bis(oxalato)borate salt. The present disclosure also relates to a method for preparing such an electrolyte solution and to a battery cell comprising the electrolyte.

### BACKGROUND

Lithium ion based batteries dominate the market for rechargeable batteries. However, the technology has drawbacks, not at least the relatively scarce resources of lithium. Although better than previous generations of secondary battery technologies, the lithium ion based batteries are not environmentally friendly, and also costly from a recycling perspective.

Sodium ion batteries represent an attractive alternative to lithium ion batteries and are arguably the most viable means of supporting renewable energy sources for the purpose of load leveling and storing excess energy.

The performance of sodium ion batteries is dependent on the properties of the electrode materials, and also on the properties of the electrolyte. The electrolyte is a critical part of the battery, and the performance thereof directly affects the performance of the sodium ion battery.

Electrolytes can be grouped into four categories: organic electrolytes, organic liquid based electrolytes, aqueous electrolytes, and solid or polymer-based electrolytes.

An organic liquid based electrolyte typically comprises a salt and an organic solvent. Compared to lithium salts, sodium salts are often less soluble in organic solvents, which limits the choice of such electrolytes.

Often, fluorinated sodium salts are used in electrolytes for sodium ion batteries. Examples of salts used for electrolyte applications include sodium hexafluorophosphate (NaPF₆), sodium tetrafluoroborate (NaBF₄), sodium perchlorate (NaClO₄), sodium trifluoromethanesulfonate (NaCF₃SO₃), sodium bis(trifluoromethanesulfonyl)imide (NaTFSI) and sodium bis(fluorosulfonyl)imide (NaFSI).

All the anions of the above mentioned salts have drawbacks. For example, ClO₄ is a strong oxidant, and the other anions all contain fluorine.

Although the use of fluorinated salts may yield a high ionic conductivity, the use of fluorine based salts is accompanied by many intrinsic safety concerns, especially at high temperatures and in the presence of moisture. Leakage of harmful liquids and gassing may occur, and the batteries may also require special packaging.

A more environmentally friendly, fluorine free and non-toxic sodium salt, as well as an electrolyte solution is therefore desired. The challenge in such development is to find a non-fluorinated salt that is soluble in the organic solvent used.

Recently, lithium bis(oxalato)borate (LiBOB) has attracted attention as a promising candidate for lithium ion battery applications. The LiBOB salt has many advantages such as low cost, wide potential window, high thermal stability, and is also fluorine free.

Zavalij et al1 (Structures of potassium, sodium and lithium bis(oxalato)borate salts from powder diffraction data, Acta Crystallographica, Section B: Structural Science, 2003) discusses the use of lithium bis(oxalato)borate, also referred to as LiBOB, in lithium ion electrolyte applications. However, its sodium counterpart, sodium bis(oxalato)borate (NaBOB), which is also discussed in Zavalij et al¹, is expressly mentioned as being unsuitable for electrolyte applications. This is due to the difficulties of dissolving this salt.

The limited solubility of NaBOB, and thereby inappropriateness in sodium ion battery applications has previously been recognized by *Cheng et al*.*²* and *Wang et al*.*³.*

In view of the above, there is a need to develop a high conductive sodium ion electrolyte suitable for use in sodium ion battery applications. Such electrolyte should be free from fluorine ions, safe and environmentally friendly.

### SUMMARY

In view of above-mentioned and other drawbacks of the prior art, it is an object of the present disclosure to provide improvements in relation to fluorine free and more environmentally friendly electrolytes and their use in sodium ion battery applications.

According to an aspect of the present disclosure, it is therefore provided, an electrolyte solution comprising:
- an alkali-metal bis(oxalato)borate salt, wherein the alkali metal ion is selected from sodium (Na⁺) and potassium (K⁺)
- an organic solvent comprising a pyrrolidone and/or a phosphoric acid ester compound.

Despite the dissolution difficulties explained in the literature with respect to sodium bis(oxalato)borate salt, hereinafter referred to as NaBOB, the present inventors have surprisingly found that this salt may be dissolved in an organic solvent selected from a pyrrolidone and a phosphoric acid ester based solvent.

Accordingly, a fluorine-free, more environmentally friendly and safe electrolyte solution is obtained. The resulting electrolyte solution has an ionic conductivity and electrochemical stability that renders the electrolyte a commercially attractive solution for sodium ion batteries. The electrolyte may also be applicable for potassium ion battery applications, due to the isostructural similarity between the potassium and sodium versions of the bis(oxalate)borate salt (Zavalij et al¹).

The use of NaBOB does not generate any toxic or dangerous products when exposed to air and water.

In embodiments, the organic solvent is N-alkyl-2-pyrrolidone having the following structure: 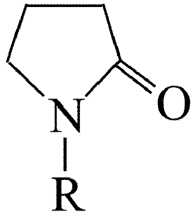 wherein R selected from an alkyl group comprising 1-8 carbon atoms, preferably 1-4 carbon atoms.

An alkyl group having a longer chain may render the organic solvent interactive with hydrophobic substances, and may also make it more prone to permeating through the skin.

Preferably, R is selected from a methyl or an ethyl group.

In embodiments, the organic solvent is N-methyl-2-pyrrolidone (NMP).

The inventors have surprisingly found that sodium bis(oxalato)borate can be fully dissolved in NMP even at high concentrations of the salt.

The resulting electrolyte formulation has a high ionic conductivity and is electrochemically stable at high voltages applied in sodium ion battery electrodes.

In alternative embodiments, the organic solvent is trialkyl phosphate having the following structure: 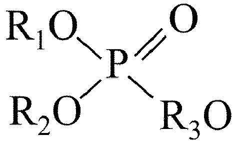 wherein R₁, R₂ and R₃ are independently selected from an alkyl group comprising 1-6 carbon atoms, preferably 1-3 carbon atoms.

Preferably, R₁, R₂ and R₃ are independently selected from a methyl or an ethyl group.

In embodiments, the organic solvent is trimethyl phosphate (TMP).

An electrolyte solution comprising TMP exhibits excellent conductive properties, and is electrochemically stable. The electrolyte can be successfully used in high voltage sodium ion batteries.

In embodiments, the organic solvent is a mixture of a pyrrolidone and a phosphoric acid ester compound, preferably a mixture of is N-methyl-2-pyrrolidone (NMP) and trimethyl phosphate (TMP).

The concentration of the salt in the electrolyte solution may be between 0.3 and 1.5 M.

A too low concentration means insufficient charge carriers, and thus a lower conductivity. If the concentration of the salt is too high, this may increase viscosity, induce ion pairing and add cost.

Preferably, the concentration of salt in the electrolyte solution is between 0.4 and 0.8 M, more preferably between 0.5 and 0.6 M.

These ranges have been found beneficial for yielding an electrolyte solution which can successfully be used in sodium ion battery applications.

The electrolyte solution preferably has a conductivity above 4 mS/cm.

According to another aspect, there is provided a battery cell comprising at least one electrode and an electrolyte solution as explained hereinbefore.

In embodiments, the electrode is a positive electrode; i.e. a cathode, comprising a Prussian blue analog material with the chemical formula Na₂Fe₂(CN)₆.

The Prussian blue analog may be referred to as Prussian white and is a framework material comprising sodium, iron, carbon and nitrogen. The large pores inside the material enable the capture and storage of a wide range of atoms or molecules.

The Prussian blue analog is environmentally friendly and can be produced at a low cost.

According to another aspect of the present disclosure, there is provided a method for preparing an electrolyte solution comprising:
- providing an alkali-metal bis(oxalato)borate salt, wherein the alkali metal ion is selected from sodium (Na⁺) and potassium (K⁺)
- dissolving said salt in an organic solvent comprising a pyrrolidone and/or a phosphoric acid ester compound.

In embodiments, the salt is dissolved in the organic solvent in a concentration of from 0.3 to 1.5 M, preferably of from 0.4 to 0.8 M.

In embodiments, the organic solvent is N-alkyl-2-pyrrolidone having the following structure: 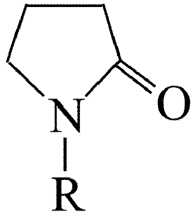 wherein R selected from an alkyl group comprising 1-8 carbon atoms, preferably 1-4 carbon atoms.

In alternative embodiments, the the organic solvent is trialkyl phosphate having the following structure: 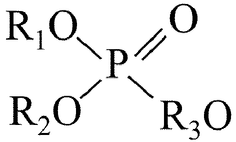 wherein R₁, R₂ and R₃ are independently selected from an alkyl group comprising 1-6 carbon atoms, preferably 1-3 carbon atoms.

Preferably, the organic solvent is N-methyl-2-pyrrolidone (NMP) and/or trimethyl phosphate (TMP).

### BRIEF DESCRIPTION OF THE DRAWINGS

The various aspects of the present disclosure, including its particular features and advantages, will be readily understood from the following detailed description and the accompanying drawings, in which:
Figure 1 schematically illustrates a sodium ion battery.
Figure 2 illustrates the X-ray diffractogram of the sodium bis(oxalato)borate that was used to perform electrochemical experiments.
Figure 3a illustrates the electrochemical behavior of an electrolyte solution according to one embodiment of the invention comprising sodium bis(oxalato)borate and N-methyl-2-pyrrolidone (NMP).
Figure 3b illustrates the electrochemical behavior of an electrolyte solution according to an alternative embodiment of the invention comprising sodium bis(oxalato)borate and trimethyl phosphate (TMP).

### Detailed description

Sodium bis(oxalato)borate (NaBOB) has the following chemical formula:

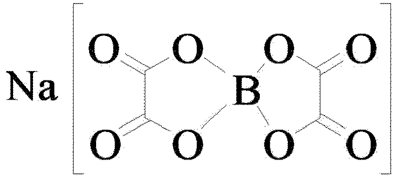

The NaBOB salt is known for its difficulties in becoming dissolved, so the fact that the present inventors have found that the salt can be dissolved, and also successfully used in sodium ion battery application, is surprising.

The crystal structure of NaBOB and KBOB differ significantly from the crystal structure of LiBOB, and this may explain why the sodium and potassium versions of the salt are so difficult to dissolve. The smaller size of the Li ion leads to chains and consequently a framework that is different from that found in the Na and K structures. The BOB ion also behaves differently (Zavalij et al¹).

The chemical and physical nature of the organic solvents, according to the present disclosure, weaken the interactions between the cation and anion of the NaBOB salt, and allows for disordering of the ions as they move from the ordered crystalline structure of the NaBOB salt in the solution. The resulting more delocalized charge gives the anion less affinity for Na⁺, yielding a better conductivity.

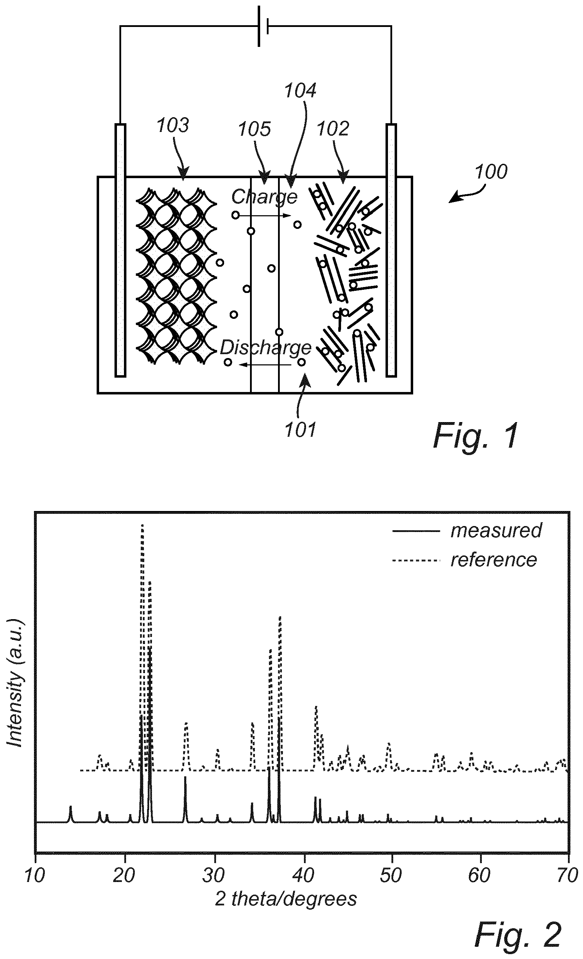

Figure 1 illustrates the schematic principles of a sodium ion battery (SIB) 100 utilizing sodium ions 101 as charge carriers. The SIB stores energy in chemical bonds of the negative electrode 102. Charging the battery 100 forces Na⁺ ions 101 to de-intercalate from the positive electrode 103 and migrate towards the negative electrode 102. During discharge, the process reverses. Once a circuit is completed, electrons pass back from the negative electrode 102 to the positive electrode 103 and the Na⁺ ions 101 travel back to the positive electrode 103. During discharge of an SIB, as illustrated in figure 1, oxidation takes place at the negative electrode 102, while reduction takes place at the positive electrode 103. The current flow is determined by the potential difference between the positive electrode 103 and the negative electrode 102, the cell voltage.

The two electrodes are separated by the electrolyte 104; i.e. an electrolyte solution according to the present disclosure.

As used herein the term "battery" means a device comprising one or more electrochemical cells.

In an "electrochemical cell", chemical energy is transformed into electricity by reduction and oxidation (redox) reactions at the electrodes.

The electrode(s) used in a battery cell of the present disclosure may comprise any electrode material commonly used in sodium ion batteries. The electrolyte solution of the present disclosure is compatible with a wide range of electrodes.

For example, the positive electrode may comprise a phosphate based material, such as NaFePO₄, NaVPO₄F, Na₃V₂(PO₄)₃, Na₂FePO₄F and Na₃V₂(PO₄)₃. Alternatively, it may comprise a transition metal compounds, e.g. NaNi_{0.5}Mn_{0.5}O₂, Na_{2/3}Mn_{2/3}Ni_{1/3-*x*}Mg*ₓ*O₂, Na_{0.44}MnO₂, Na₁₊ₓV₃O₈, NaFeO₂, sulfides and Prussian blue analogues (of general form: Na₂*M*[*M*(CN)₆], wherein M is a transition metal).

In embodiments, the positive electrode material comprises a Prussian blue analog material with the chemical formula Na₂Fe[Fe(CN)₆].

Such a material may be obtained according to the method described in WO2018/056890, which is incorporated herein by reference.

A battery cell comprising a Prussian blue analog material with the chemical formula Na₂Fe[Fe(CN)₆] and the electrolyte solution as described hereinbefore is environmentally friendly and can be produced at a low cost. The combination pushes sodium ion battery technology towards a completely environmentally friendly and safe system as Prussian blue itself contains no toxic elements

The conductivity paired with the good rate capability of the cathode material allows for fast charging and discharging

The negative electrode material is not particularly limited as long as it is a material capable of storing/releasing sodium. Examples include metal composite oxides, sodium metal, sodium alloys, silicon, silicon-based alloys, tin-based alloys, bismuth-based alloys, metal oxides, conductive polymers such as polyacetylene, Na-Co-Ni-based materials, hard carbon and the like.

The battery cell may further comprise a separator 105 to prevent electrical short circuit between the negative and the positive electrodes, and to provide mechanical stability to the cell. The separator material can be any material which is chemically stable and electrically insulating, e.g. polymer films commonly made from polypropylene, polyethylene or combinations of these.

### Experimental data

### Powder diffraction

First, the sodium bis(oxalato)borate salt (NaBOB) used for experimental data was structurally characterized by X-ray diffraction. The X-ray diffractogram is illustrated in figure 2. The diffraction pattern was compared with a reference diffractogram to confirm the identity of the salt and to confirm its purity. According to our data the salt used contained no crystalline impurities and showed a high degree of crystallinity.

### Preparation of the electrolyte solutions

The electrolytes were prepared in an argon-filled glovebox as follows: The NaBOB salt was carefully dried at 120°C under vacuum. The NMP and TMP solvents were dried over molecular sieves. After drying the salt and solvents, these were added to volumetric vials in order to produce 0.5 M solutions.

### Conductivity of the electrolyte solutions

The conductivity was measured using a *METTLER TOLEDO SevenGo Duo pro* conductivity meter using a *METTLER TOLEDO InLab 738 ISM* conductivity probe under inert atmosphere. The measurements were done following calibration by standard solutions and repeated three times. Calibration and measurements were performed at a temperature of 23°C.

The conductivity of 0.5 M NaBOB in NMP was 7.2 mS/cm. The conductivity of 0.5 M NaBOB in TMP was 4.6 mS/cm.

These results show that both electrolyte solutions exhibit a good conductivity, and demonstrate their potential for use in sodium ion battery applications.

### Cycling data and electrochemical stability of the electrolyte solutions

The electrodes used consisted of Prussian White slurry coated on aluminum foil together with CMC binder and additive carbon. The composition of the electrode was 85 wt% PW, 10 wt% C-65 carbon, and 5 wt% CMC binder with a total active mass loading of 2.5mg PW on each 13mm diameter electrode disk. For full-cells, 13 mm disks of hard-carbon was prepared in a similar manner with a composition of 95 wt% Hard carbon and 5 wt% CMC binder. The loading of hard carbon was 1.43 mg per 13mm diameter disk. For half-cells sodium counter electrodes were prepared by pressing metallic sodium on aluminum foil and punching 14 mm diameter disks.

Assembly of pouch-cells was performed under argon and the separator consisted of glass fiber and current collectors of aluminum. After stacking the electrodes and separator, 100µL of the NMP 0.5M NaBOB or TMP 0.5M NaBOB electrolyte was added before sealing the cells under 5 mBar argon.

Galvanostatic cycling was performed on *Landt Instruments* Battery Test System Model CT2001A after 12h soaking time following assembly. The cycling used a constant current corresponding to C/5 calculated from a positive electrode capacity of 150 mAh/g. The full-cells were cycled between 1 & 4 volts while half-cells were cycled between 2 & 4 volts.

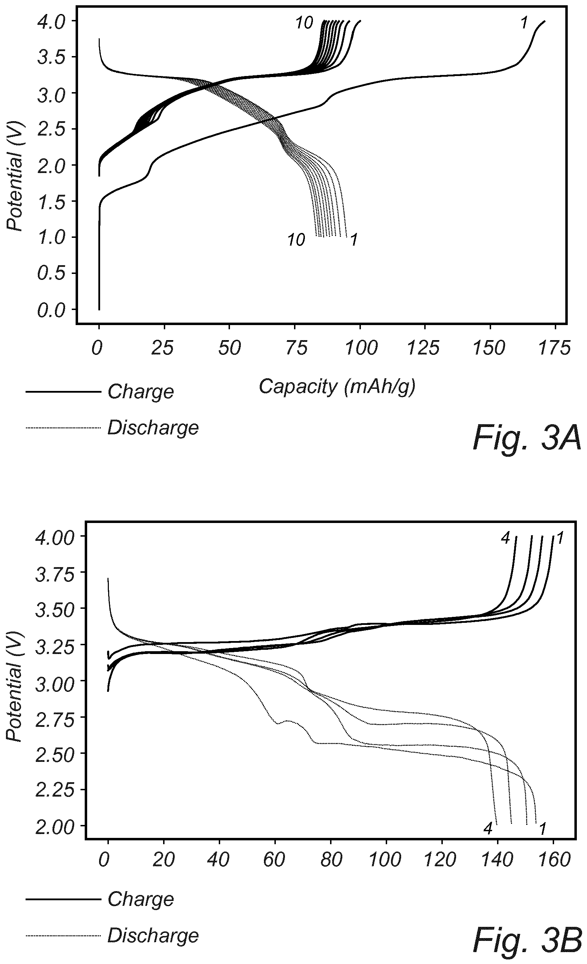

As illustrated in the electrochemical cycling of figure 3a), a stable electrochemical behavior of NMP 0.5M NaBOB electrolyte is observed in a full-cell consisting of a Prussian white positive electrode and hard-carbon negative electrode over 10 cycles at C/5 cycling rate.

As illustrated in the electrochemical cycling in figure 3b, a stable electrochemical behavior of TMP 0.5M NaBOB electrolyte is observed in a half-cell consisting of a Prussian white positive electrode and metallic sodium negative electrode over 4 cycles at C/5 cycling rate.

To summarize, these results demonstrate that the electrolyte solutions of the present disclosure exhibit a good electrochemical behavior, and are suitable for use in sodium ion battery applications.

Even though the present disclosure has been described with reference to specific exemplifying embodiments thereof, many different alterations, modifications and the like will become apparent for those skilled in the art.

Variations to the disclosed embodiments can be understood and effected by the skilled addressee in practicing the present disclosure, from a study of the drawings, the disclosure, and the appended claims. Furthermore, in the claims, the word "comprising" does not exclude other elements or steps, and the indefinite article "a" or "an" does not exclude a plurality.

### References

1. P. Y. Zavalij, S. Yang and M. S. Whittingham, Structures of potassium, sodium and lithium bis(oxalato)borate salts from powder diffraction data, Acta Crystallographica, Section B: Structural Science, 2003, 59, 753-759.
2. Chen, J., Huang, Z., Wang, C., Porter, S., Wang, B., Lie, W. & Liu, H. (2015). Sodium-difluoro(oxalato)borate (NaDFOB): A new electrolyte salt for Na-ion batteries. Chemical Communications, 51 (48), 9809-9812.
3. C. Ge, L. Wang, L. Xue, Z.-S. Wu, H. Li, Z. Gong and X.-D. Zhang, Synthesis of novel organic-ligand-doped sodium bis(oxalate)-borate complexes with tailored thermal stability and enhanced ion conductivity for sodium ion batteries, J. Power Sources, 2014, 248, 77-82.

## Claims

1. An electrolyte solution comprising:
- an alkali-metal bis(oxalato)borate salt, wherein the alkali metal ion is selected from sodium (Na⁺) and potassium (K⁺)
- an organic solvent comprising a pyrrolidone and/or a phosphoric acid ester compound.

2. An electrolyte solution according to claim 1, wherein the organic solvent is N-alkyl-2-pyrrolidone having the following structure: 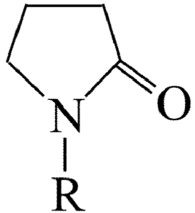 wherein R is selected from an alkyl group comprising 1-8 carbon atoms, preferably 1-4 carbon atoms.

3. An electrolyte solution according to claim 1 or claim 2, wherein the organic solvent is N-methyl-2-pyrrolidone (NMP).

4. An electrolyte solution according to claim 1, wherein the organic solvent is trialkyl phosphate having the following structure: 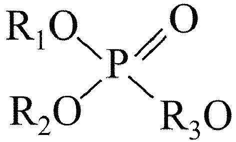 wherein R₁, R₂ and R₃ are independently selected from an alkyl group comprising 1-6 carbon atoms, preferably 1-3 carbon atoms.

5. An electrolyte solution according to claim 1 or claim 4, wherein the organic solvent is trimethyl phosphate (TMP).

6. An electrolyte solution according to any one of the preceding claims, wherein the concentration of the salt in said electrolyte solution is from 0.3 to 1.5 M.

7. An electrolyte solution according to claim 6, wherein the concentration of the salt in said electrolyte solution is between 0.4 and 0.8 M, preferably between 0.5 and 0.6 M.

8. An electrolyte solution according to any one of the preceding claims, wherein the conductivity of said electrolyte solution is above 4 mS/cm.

9. A battery cell comprising at least one electrode and an electrolyte solution according to any one of claims 1-8.

10. A battery cell according to claim 9, wherein said electrode is a positive electrode comprising a Prussian blue analog material with the chemical formula Na₂Fe₂(CN)₆.

11. A method for preparing an electrolyte solution comprising:
- providing an alkali-metal bis(oxalato)borate salt, wherein the alkali metal ion is selected from sodium (Na⁺) and Kalium (K⁺)
- dissolving said salt in an organic solvent comprising a pyrrolidone and/or a phosphoric acid ester compound.

12. A method according to claim 11, wherein said salt is dissolved in said organic solvent in a concentration of from 0.3 to 1.5 M, preferably of from 0.4 to 0.8 M.

13. A method according to claim 11 or claim 12, wherein the organic solvent is N-alkyl-2-pyrrolidone having the following structure: 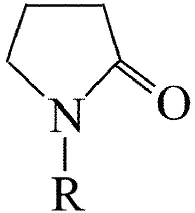 wherein R is selected from an alkyl group comprising 1-8 carbon atoms, preferably 1-4 carbon atoms.

14. A method according to claim 11 or claim 12, wherein the organic solvent is trialkyl phosphate having the following structure: 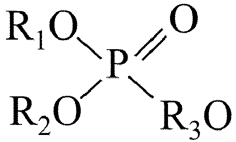 wherein R₁, R₂ and R₃ are independently selected from an alkyl group comprising 1-6 carbon atoms, preferably 1-3 carbon atoms.

15. A method according to any one of claims 11-14, wherein the organic solvent is N-methyl-2-pyrrolidone (NMP) and/or trimethyl phosphate (TMP).
